Europäisches Patentamt

European Patent Office

Office européen des brevets

(11) Veröffentlichungsnummer: **0 327 096**
A1

## (12) EUROPÄISCHE PATENTANMELDUNG

(21) Anmeldenummer: 89101838.4

(22) Anmeldetag: 02.02.89

(51) Int. Cl.⁴ **B25J 9/10** , **B25J 9/08** , **B25J 13/08**

(30) Priorität: 02.02.88 DE 3803040

(43) Veröffentlichungstag der Anmeldung:
09.08.89 Patentblatt 89/32

(84) Benannte Vertragsstaaten:
DE ES FR GB IT SE

(71) Anmelder: NOKIA MECHATRONICS GMBH
Tegernseer Landstrasse 161
D-8000 München 90(DE)

(72) Erfinder: Beyer, Hasso
Kreuzeckstrasse 9
D-8900 Augsburg(DE)
Erfinder: Meissner, Hans-Georg, Dr. Ing.
Dr.-Schreyer-Strasse 15
D-8214 Bernau a.Ch.(DE)

(74) Vertreter: Liesegang, Roland, Dr.-Ing. et al
FORRESTER & BOEHMERT
Widenmayerstrasse 4 Postfach 22 01 37
D-8000 München 22(DE)

(54) Schwenkantrieb für den Arm eines Industrieroboters.

(57) Ein Schwenkantrieb für den Arm eines Industrieroboters weist eine kompakte, modular aufgebaute Baugruppe aus einer Antriebseinheit 40, einem Spindeltrieb 42 mit einer längenveränderbaren Strebe und einem diese Teile verbindenden Stirnradgetriebe 46 auf.

EP 0 327 096 A1

Fig. 7

## Schwenkantrieb für den Arm eines Industrieroboters

Die Erfindung betrifft einen Schwenkantrieb für den Arm eines Industrieroboters mit den Merkmalen des Oberbegriffs des Anspruchs 1 (DE-A-26 49 123).

Je ein derartiger Spindeltrieb läßt sich zum unabhängigen Verschwenken der beiden aneinander angelenkten Arme eines Industrieroboters in vorprogrammierte, mittels einer Steuervorrichtung für den Antrieb vorgebbare Winkelstellungen positionieren. Hierzu ist eine Regelung der Wege bzw. Geschwindigkeiten erforderlich, was eine Messung der Wege und Geschwindigkeiten bedingt. Die GEschwindigkeit wird bei dem bekannten Schwenkantrieb in analoger Meßtechnik erfaßt, wobei die Ist-Geschwindigkeit mittels eines an der Motorwelle sitzenden Tachogenerators erfaßt wurde, während die Wege mittels eines mit der Motorwelle ebenfalls gekuppelten Winkelcodierers erfaßt wurden. Die Endstellungen der Arme wurden dabei dadurch zur Steuervorrichtung signalisiert, daß an den Armen vorgesehene mechanische Anschläge an Endschaltern anliefen.

Der bekannte Schwenkantrieb besitzt also eine Vielzahl von Baugruppen, die teilweise voneinander gesondert am Roboter vorgesehen sind, wobei nicht nur der große Platzaufwand sondern auch die mit den Roboterarmen mitzubewegenden zahlreichen elektrischen Leitungen störend sind.

Der Erfindung liegt die Aufgabe zugrunde, einen Schwenkantrieb der im Oberbegriff des Anspruchs 1 beschriebenen Art so auszubilden, daß er weniger Teile als die herkömmlichen Schwenkantriebe aufweist und diese wenigen Teile platzsparend und unter Vermeidung von zahlreichen elektrischen Leitungen, die mit den Roboterarmen mitbewegt werden müssen, am Roboter anbringbar sind.

Zur Lösung dieser Aufgabe sind bei dem Schwenkantrieb nach der Erfindung die Merkmale des Anspruchs 1 vorgesehen.

Ein Schwenkantrieb nach der Erfindung faßt alle wesentlichen Antriebsteile in einer kompakten Baueinheit zusammen. Aufgrund der digitalen Erfassung des Weges mit dem Winkelcodierer und Verarbeiten des Ausgangssignales dieses Winkelcodierers in der Steuervorrichtung zu einem Geschwindigkeits-Regelsignal wird der Tachogenerator überflüssig. In dem dadurch gewonnenen Bauraum läßt sich ein Endschaltergetriebe zusammen mit den Endschaltern unterbringen, so daß sich die Anbringung von Anschlägen zur Betätigung der Endschalter an den Armen erübrigt, diese Teile vielmehr im Schwenkantrieb integriert sind. Aufgrund der digitalen Ausbildung des Winkelcodierers lassen sich die Versorgungs- und Signalleitungen für den Schwenkantrieb in einem einzigen Kabel zusammenfassen, was Montage und Wartung vereinfacht und die Störanfälligkeit wesentlich vermindert. Weitere vorteilhafte Ausgestaltungen der Erfindung sind in den Unteransprüchen unter Schutz gestellt.

Besonders vorteilhaft und von selbständiger Bedeutung sind dabei die Merkmale der Ansprüche 8 und 9. Hierdurch lassen sich Ungenauigkeiten beim Positionieren bzw. schädliche Auswirkungen der Wärmedehnung im Betrieb minimieren.

Die Erfindung ist im folgenden anhand schematischer Zeichnungen an einem Ausführungsbeispiel mit weiteren Einzelheiten näher erläutert. Es zeigen:

Fig. 1 eine Schemadarstellung eines mit zwei Schwenkantrieben nach der Erfindung ausgerüsteten Industrieroboters;

Fig. 2,3 und 4 drei unterschiedliche Stellungen eines Armes des Roboters nach Fig. 1;

Fig. 5 und 6 Seitenansicht und Rückansicht eines ausgeführten Industrieroboters;

Fig. 7 eine perspektivische Ansicht eines ausgeführten Schwenkantriebes nach der Erfindung;

Fig. 8 eine Explosionsdarstellung der Antriebseinheit des Schwenkantriebes nach Fig. 7;

Fig. 9 und 10 Rückansicht und Seitenansicht, beide teilweise geschnitten, eines Antriebes, der baugleich für die Erzeugung der Antriebsbewegungen um die erste, zweite und dritte Achse des Roboters eingesetzt wird und

Fig. 11 und 12 einen Längsschnitt und eine Seitenansicht eines passiven Zusatzantriebselementes, das unterstützend dem Antrieb für die Bewegung um die zweite Achse des Roboters hinzugefügt ist.

In den Zeichnungen sind für gleiche bzw. gleichwirkende Teile durchgehend gleiche Bezugszahlen verwendet.

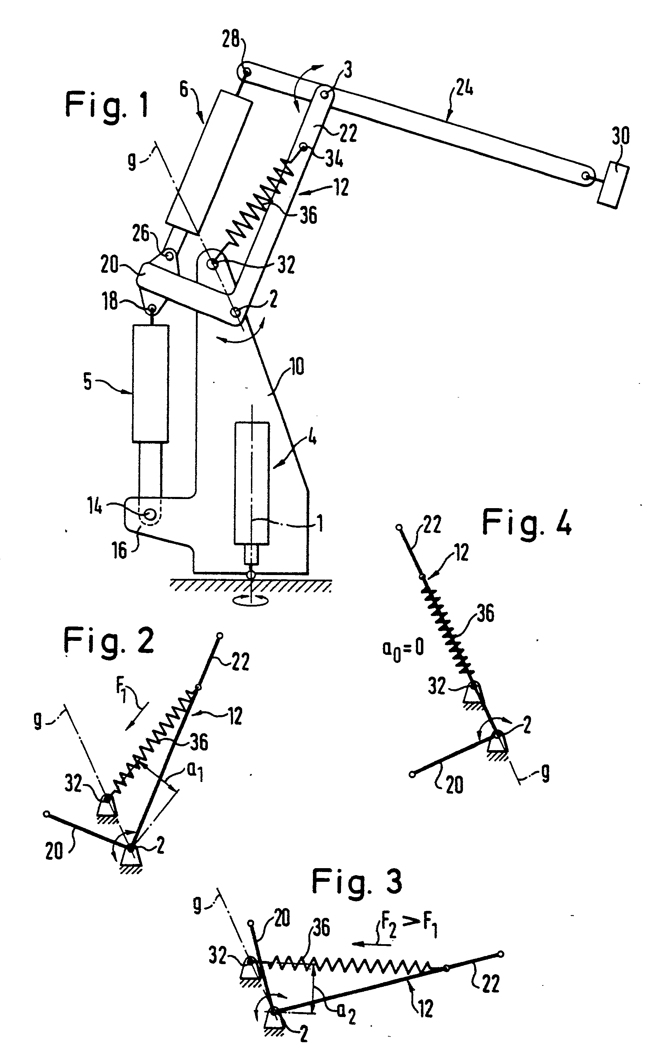

Der schematisch in Fig. 1 dargestellte Roboter weist einen Lagerbock 10 auf, der mittels eines ersten Antriebes 4 um eine erste, vertikale Achse 1 schwenkbar ist. Am Lagerbock 10 ist eine erster Arm 12 in Gestalt eines Winkelhebels um eine zweite, horizontale Achse 2 (senkrecht zur Zeichenebene der Fig. 1) mittels eines zweiten Antriebes 5 verschwenkbar, der baugleich mit dem ersten Antrieb 4 ist. Der zweite Antrieb 5 ist über einen Anlenkpunkt 14 an einem Ansatz 16 des Lagerbockes 10 und mit seinem anderen Ende an einem Anlenkpunkt 18 an einem Schenkel 20 des ersten Armes 12 angelenkt.

Am freien Ende des anderen Schenkels 22 des ersten Armes 12 ist ein zweiter Arm 24 um eine dritte, horizontale Achse 3 (senkrecht zur Zeichenebene der Fig. 1) mittels eines dritten Antriebes 6 schwenkbar, der zwischen einem Anlenkpunkt 26 an dem Schenkel 20 und einem Anlenkpunkt 28 am einen Ende des zweiten Armes 24 wirksam ist. Am anderen freien Ende trägt der zweite Arm 24 eine um beispielsweise drei weitere Freiheitsgrade bewegliche Roboterhand 30.

Zwischen einem Anlenkpunkt 32 am Lagerbock 10 und einem Anlenkpunkt 34 am Schenkel 22 des ersten Arms 12 ist ein passives Antriebselement 36 angeordnet, das im vorliegenden Fall als Schraubenzugfeder wirkt. Das passive Antriebselement 36 wirkt zusätzlich zum zweiten Antrieb 5 auf den ersten Arm 12 ein, wie nun anhand der Fig. 2 bis 4 erläutert ist.

Fig. 2 zeigt die Stellung des ersten Armes 12, die gleich wie in Fig. 1 ist. Dabei wirkt die Zugfeder mit einer Kraft $F_1$ an einem Hebelarm $a_1$ um die Achse 2, übt also ein Gegenmoment $a_1 \times F_1$ zu dem im Uhrzeigersinn drehenden, "positiven" Antriebsmoment des zweiten Antriebes 5 aus. Das Gegenmoment der Zugfeder 36 vermindert also die Wirkung des zweiten Antriebes auf den zweiten Arm 12.

Bei einer Schwenkung im Uhrzeigersinn erreicht der zweite Arm 12 schließlich seine Endlage gemäß Fig. 3. Dabei hat sich die Zugfeder gelängt, so daß eine Federkraft $F_2$ wirksam wird, die größer als die Federkraft $F_1$ in der Stellung nach Fig. 2 ist. Diese Federkraft $F_2$ wirkt am Hebelarm $a_2$ um die Achse 2 entgegen dem Antriebsmoment des zweiten Antriebes 5. Wird von dem Antrieb 5 weder ein Antriebes- noch ein Bremsmoment auf den ersten Arm 12 übertragen, so wirkt nur noch das Moment der Zugfeder 36 auf den ersten Arm 12 so lange, bis der Hebelarm der Federkraft bezüglich der zweiten Achse 2 zu Null geworden ist. Diese Stellung ist dann erreicht, wenn die Achsenlage des Schenkels 22 mit der Verbindungsgeraden g zwischen der Achse 2 und dem unteren Anlenkpunkt 32 der Zugfeder 36 zusammenfällt (Fig. 4). In dieser Totpunktlage ist der Zusatzantrieb 36 also wirkungslos. Bei einer Drehung des ersten Armes 12 entgegen dem Uhrzeigersinn über die Lage nach Fig. 4 hinaus ändert sich die Vorzeichenrichtung des von der Zugfeder 36 ausgeübten Momentes derart, daß nun das Federmoment das mittels des Antriebes 5 im Uhrzeigersinn aufgebrachte Antriebsmoment verstärkt. Dies könnte dadurch vermieden werden, daß die Stellung nach Fig. 4 als linke Grenzstellung des ersten Armes 12 gewählt wird.

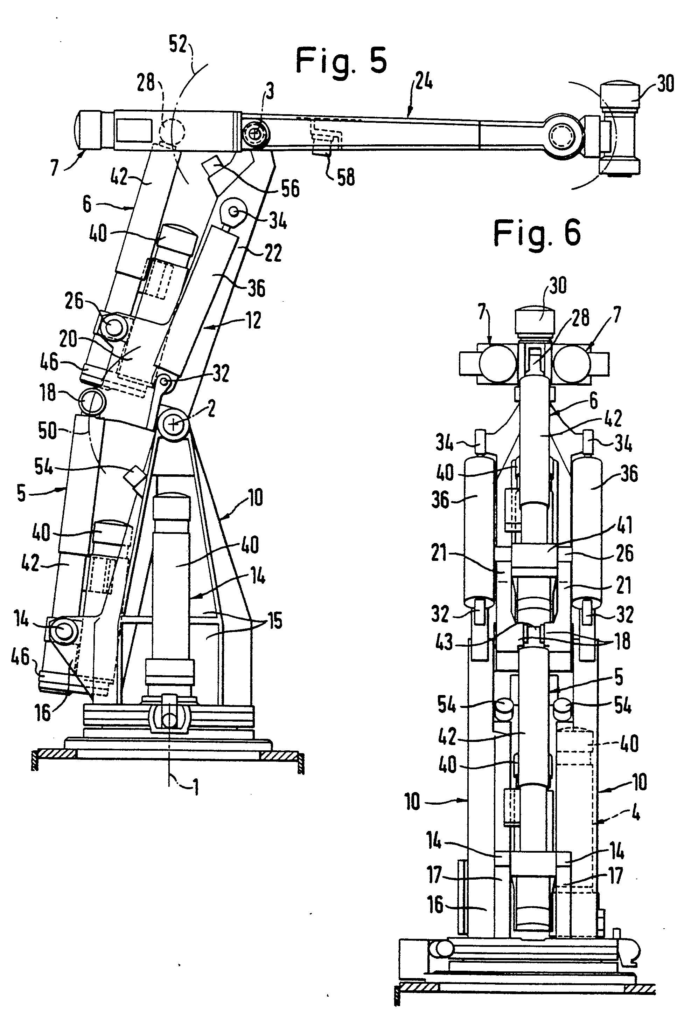

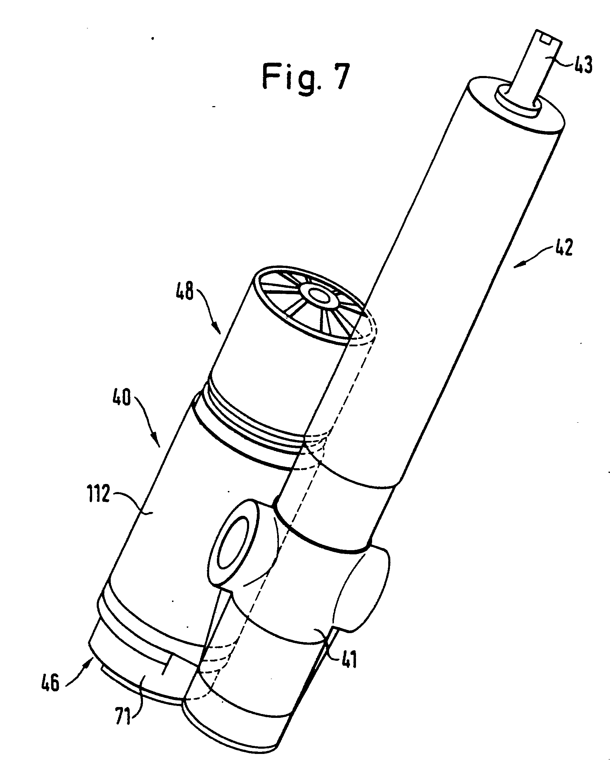

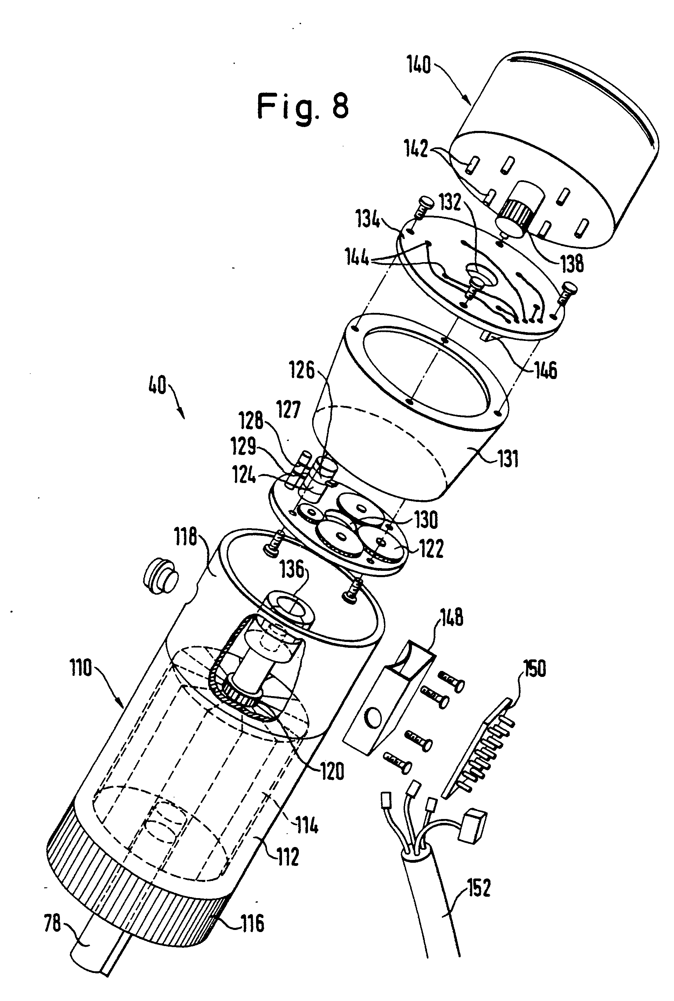

Die ausgeführte Konstruktion nach den Figuren 5 und 6 ist nach dem in Fig. 1 gezeigten Schema aufgebaut. Anhand der Fig. 1 schon beschriebene, mit gleichen Bezugszeichen versehene Teile sowie die Funktion sind zur Vermeidung von Wiederholungen nicht nochmals beschrieben. Jedoch erkannt man in den Fig. 5 und 6 einige zusätzliche Details. So ist zunächst erkennbar, daß der zweite Antrieb 5 und der dritte Antrieb 6 jeweils zwei parallel angeordnete Elemente aufweist, nämlich einen Elektromotor 40 und eine längenveränderbare Strebe 42 in Form eines Spindeltriebes, wobei die Verbindung dieser beiden Elemente durch ein am Fuß angeordnetes Stirnradgetriebe 46 hergestellt wird. Im einzelnen ist die Baugruppe aus Motor 40, Strebe 42 und Stirnrädgetriebe 46 in den Fig. 7 und 8 dargestellt und anhand dieser Figuren im folgenden noch erläutert.

Die Strebe 42 hat einen Lageransatz 41 zur ihrer beidseitigen Lagerung in dem gegabelten Schenkel 20 mit den beiden Gabelteilen 21 des ersten Armes 12 (vgl. Fig. 6). Die beiden Gabelschenkel 21 bilden weiter unten am Anlenkpunkt 18 eine beidseitige Lagerung für den Kopf 43 der Strebe des Antriebs 5. Die Lagerung der Strebe 42 des Antriebs 6 am zweiten Arm 24 ist ähnlich ausgebildet.

Ferner ist auch der untere Antrieb 5 in dem gabelartig ausgebildeten Ansatz 16 mit den Gabelschenkeln 17 beidseitig in gleicher Weise wie der Antrieb 6 über den Lageransatz 41 der Strebe 42 in entsprechend ausgebildeten Lagern (vgl. Fig. 7) bei 14 gelagert.

Fig. 5 zeigt, daß die Elektromotoren 40 der beiden Antriebe 5 und 6 jeweils innen zwischen den Gabelschen keln des Lagerbocks 10 bzw. des ersten Armes 12 platzsparend und parallel zu den als Lenker fungierenden Streben 42 aufgenommen sind. Es wird also für diese Motoren kein zusätzlicher Bauraum beansprucht.

Der erste Antrieb 4 zur Erzeugung der Drehbewegung des Lagerbocks 10 um die vertikale Achse 1 benötigt keine längenveränderbare Strebe, hat aber gleichwohl einen mit den zweiten und dritten Antrieben 5 und 6 baugleichen Elektromotor. Das gleiche gilt für zwei weitere, am zweiten Arm 24 symmetrisch (Fig. 6) angeordnete Antriebe 7 für die Roboterhand 30, bei denen die Antriebsmomente über Wellen und Getriebe zur Roboterhand 30 in bekannter Weise übertragen werden.

In Fig. 5 sind die Schwenkbereiche des ersten Armes 12 und des zweiten Armes 24 durch Kreissegmente 50 bzw. 52 bezeichnet. Den Aufprall dämpfende Anschläge 54 am Lagerbock 10, 56 am ersten Arm 12 und 58 am zweiten Arm 24 begrenzen die Schwenkbeweglichkeit der beiden Arme.

In Fig. 7 ist der Schwenkantrieb mit Antriebseinheit 40 und darauf aufgesetzter, gleichachsiger Winkelmeßeinrichtung 48 und parallel angeordnetem Spindeltrieb 42 gezeigt, der über ein Stirnradgetriebe 46 mit der Antriebseinheit 40 gekuppelt ist.

Fig. 8 zeigt die Anordnung aus Antriebseinheit 40 und Winkelmeßeinrichtung 48 im einzelnen. Zur Antriebseinheit 40 gehört ein Gleichstrommotor 110 mit Stator 112 und Rotor 114. Am unteren Ende des Motors 110 ist eine Bremse 116 üblicher Bauart angeordnet. Der Stator 112 bildet gleichzeitig Teil eines Gehäuses, das sich in ein oberes Gehäuseteil 118 fortsetzt. Die Abtriebswelle 78, die in dieses obere Gehäuseteil 118 hineinragt, trägt ein Ritzel 120 zum Antrieb eines im Gehäuseteil 118 untergebrachten Endschaltergetriebes 122, das über mehrere, im einzelnen nicht bezeichnete Räder eine Nockenwalze mit zwei Nockenscheiben 124, 126 antreibt, die an einem Ständer 127 befestigte Endschalter 128, 129 in den beiden Grenzstellungen des Armes betätigen können. Das obere Ende der Motorwelle 78 ragt durch eine zentrale Öffnung 130 des Endschaltergetriebes 122 sowie durch eine zentrale Öffnung 132 einer Steckerplatine 134 hindurch und ist über eine Kupplung 136 mit dem Antriebszapfen 138 eines digitalen Winkelcodierers (21 bit) 140 verbunden, von dessen unterem Ende insgesamt sechs Steckelemente 142 zum Zusammenwirken mit entsprechenden Löchern 144 in der Steckerplatine 134 wegragen. Die elektrischen Verbindungen sind an einem von der Unterseite der Steckerplatine 134 wegragenden Anschlußleiste 146 zusammengefaßt, die in einen Adapterkasten 148 mit darin befindlicher Anschlußplatte 150 zum Anschluß eines einzigen Signal- und Versorgungsübertragungskabels 152 hineinragt. Mit der Bezugszahl 131 ist ein inneres Adaptergehäuse bezeichnet.

Das obere Gehäuseteil 118, das bei der herkömmlichen Konstruktion einen Tachogenerator zur Geschwindigkeitsmessung aufnahm, hat nun Platz zur Aufnahme des Endschaltergetriebes und der Endschalter, die somit nicht mehr außerhalb der Antriebseinheit angeordnet und nicht mehr mit gesonderten, freiliegenden elektrischen Leitungen versorgt zu werden brauchen.

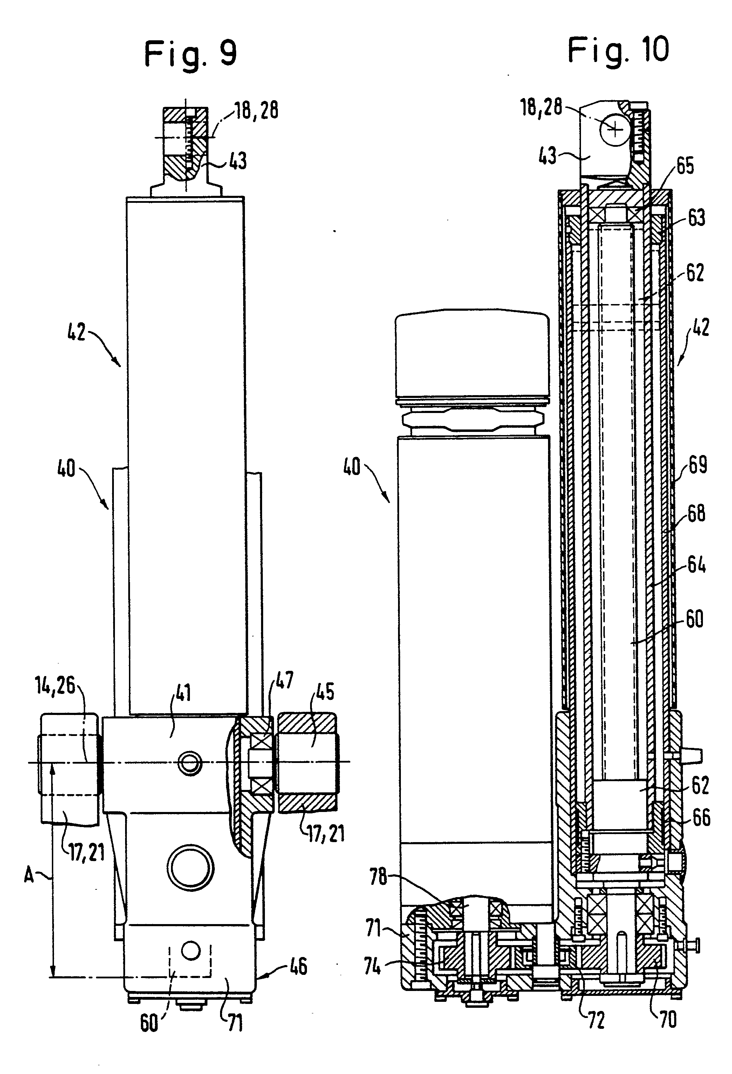

Die Fig. 9 und 10 zeigen im einzelnen den Aufbau des Spindeltriebes 42 und des Stirnradgetriebes 46.

Die aus den Elementen Antriebseinheit 40, Spindeltrieb bzw. längenveränderbare Strebe 42 und Getriebe 46 bestehenden Antriebe 5,6 sind in einem Lageransatz 41 für die Anlenkpunkte 14 bzw. 26 beidseitig über in den Gabelschenkeln 17 bzw. 21 steckende Lagerzapfen 45 in Kegelrollenlagern 47 gelagert.

Fig. 10 zeigt den Aufbau der Strebe 42 bzw. des Spindeltriebes im einzelnen mit einer Kugelgewindespindel 60 und einer darauf aufgeschraubten Spindelmutter 62 mit in die Gewinderillen zwischen diesen beiden Teilen eingefüllten Kugeln (nicht gezeigt).

Die Spindelmutter 62 ist durchgezogen in eingefahrener und gestrichelt in ausgefahrener Lage der Strebe 42 dargestellt. Die Spindelmutter 62 trägt ein ausfahrbares Strebenrohr 64 und ist über eine abdichtende Führung 66 an der Innenwand eines Schutzrohres 68 beim Ausfahren der Strebe geführt. Der Fuß der Gewindespindel 60 trägt ein Stirnrad 70, das über ein Zwischenrad 72 von einem auf der Abtriebswelle 78 des Elektromotors 40 sitzenden Stirnrad 74 mit einer Untersetzung vom 1:2,5 angetrieben wird. Das so gebildete Stirnradgetriebe 46 ist in einem Kompaktgehäuse 71 aus einer Aluminiumlegierung untergebracht, mit dem das Schutzrohr 68 fest verbunden ist und das auch den Lageransatz 41 aufweist.

Das Strebenrohr 64 trägt ein Auge 43 zur Aufnahme eines Lagerbolzens an den Anlenkpunkten 18 bzw. 28, so daß das Strebenrohr 64 zusammen mit der Spindelmutter 62 drehfest gehalten ist, mit der Gewindespindel 60 also nicht mitdrehen kann sondern bei deren Drehung sich in Achsrichtung verlagert. Dabei wird das Strebenrohr 64 außen über ein Gleitlager 63 abgestützt, das fest in das Ende des stehenbleibenden Schutzrohrs 68 eingepaßt ist. Das freie Spindelende ist über ein Kugellager 65 innen in dem Strebenrohr 64 gelagert.

Ein äußeres Schutzrohr 69 aus Kunststoff ist fest mit dem Auge 43 verbunden. Die beiden Schutzrohre 68,69 umgeben auch in voll ausgefahrenem Zustand der Strebe 42 deren bewegte Teile 60,62 und schützen Sie damit vor mechanischer Beanspruchung oder sonstigen nachteiligen Umgebungseinflüssen.

Um schädliche Auswirkungen, z.B. Ungenauigkeiten, aufgrund der im Betrieb unvermeidlichen thermischen Ausdehnung der Spindel zu vermeiden, ist der Lageransatz 41 etwa in einem Abstand A vom unteren Spindelende angeordnet, der etwa einem Viertel der gesamten Spindellänge entspricht. Dies ermöglicht der Spindel 60, sich in beide Richtungen etwa gleich auszudehnen, weil sich das Gehäuse aufgrund seines Werkstoffs Aluminium etwa doppelt so stark wärmedehnt wie die Spindel, so daß eine effektive Spindelausdehnung in beiden Richtungen ermöglicht und damit in jeder Richtung nur halb so groß ist, als wenn die Spindel an einem Ende festgehalten wäre. Hierdurch wird die Positioniergenauigkeit an der Roboterhand erhöht.

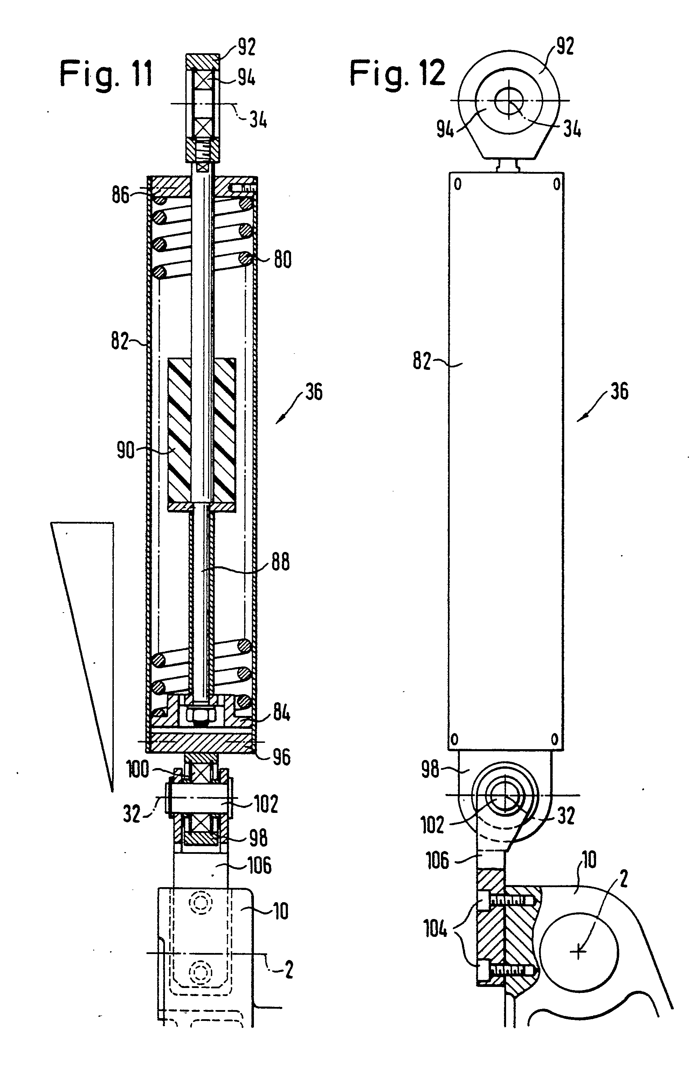

Die Fig. 11 und 12 zeigen eine ausgeführte Konstruktion des passiven Antriebselementes 36, das als Zusatzantrieb zum dritten Antrieb 5 auf den ersten Arm 12 wirkt. Eine Schraubendruckfeder 80 ist in eine Hülse 82 zwischen einem Federteller 84 und dem oberen Boden 86 der Hülse 82 aufgenommen. Der Federteller 84 ist mit einer Stange 88 verbunden, die am mittleren Bereich der Hülse ein Dämpfungselement 90 trägt und durch den oberen Boden 86 durchgeführt ist, um ein Auge 92 mit Lager 94 zur Verbindung mit einem nicht gezeigten Zapfen am Anlenkpunkt 34 des ersten Armes 12 zu bilden. Das Dämpfungselement 90 dient als Anschlag für die Begrenzung des Schwenkweges des Arms 12 im Uhrzeigersinn (in Fig. 1 oder 5 gesehen).

Am unteren Boden 96 der Hülse 82 ist ebenfalls ein Auge 98 mit Lager 100 zur Lagerung auf einem Lagerzapfen 102 vorgesehen, der in einer am Lagerbock 10 mittels Schrauben 104 befestigten Gabel 106 sitzt.

Die Schraubendruckfeder 80 ist gemäß dem neben Fig. 11 gezeichneten Hub-Federkraft-Diagramm vorgespannt.

Der beschriebene modulare Aufbau des Schwenkantriebes ermöglicht eine komplette Montage vor dem Einbau im Roboter.

Statt der Anordnung nach Fig. 11 und 12 kann auch ein passiver pneumatischer oder hydraulischer Zylinder eingesetzt werden.

Bei dem beschriebenen Schwenkantrieb ist eine kompakte Bauweise unter Verwendung handelsüblicher Elektromotoren 110 durch den Verzicht auf einen Tachogenerator erreicht, der Raum für die Unterbringung des Endschaltergetriebes 122 und die Kupplung 136 zum Anschluß des digitalen Winkelcodierers 140 schafft.

Dadurch, daß alle elektrischen Verbindungen des Schwenkantriebes zu einer Anschlußplatte 150 geführt sind, kann der Schwenkantrieb über ein einziges Versorgungs- und Signalübertragungskabel 152 über einen Verteilerkasten (nicht gezeigt) im Roboterfuß an eine Steuervorrichtung mit Prozessor angeschlossen werden, der die zur Weg- und Geschwindigkeitsregelung erforderlichen Regelsignale aus dem Vergleich zwischen dem vom Winkelcodierer 140 erfaßten Istwert und einem Sollwert ermittelt und an den Elektromotor 110 entsprechende Stellsignale abgibt. Hierdurch wird erreicht, daß störanfällige elektronische Baugruppen vom Roboter ferngehalten sind, daß der Verkabelungsaufwand sehr gering ist und daß zusätzliche Achsen in einfacher Weise anschließbar sind.

Der modulare Aufbau des Schwenkantriebes ermöglicht eine komplette Montage vor dem Einbau in den Roboter. Dies und die erzielte Baugleichheit der einzelnen Module, - Antriebseinheit 40, Spindeltrieb 42, Stirnradgetriebe 46 -, für unterschiedliche Achsen vereinfacht Montage, Wartung und Lagerhaltung.

## Ansprüche

1. Schwenkantrieb für den Arm eines Industrieroboters mit einer Antriebseinheit und einem davon angetriebenen Spindeltrieb mit einer längenveränderbaren Strebe, wobei der Schwenkantrieb als modulare Baugruppe aus der Antriebseinheit (40), dem mit paralleler Achsenlage dazu angeordneten Spindeltrieb (42) und einem Getriebe (46) ausgebildet ist, welches die Abtriebswelle (78) der Antriebseinheit (40) mit der Gewindespindel (60) des Spindeltriebes kuppelt, und wobei die Antriebseinheit (40) einen Elektromotor (110) und einen digitalen Winkelcodierer (140) zur digitalen Erfassung des Schwenkweges des Armes aufweist, dadurch gekennzeichnet, daß der Elektromotor (110) getriebeseitig eine Bremse (116) hat, daß auf der dem Getriebe (46) abgewandten Seite des Elektromotors (110) ein mit der Motorwelle (78) über ein Ritzel (120) gekuppeltes Endschaltergetriebe (122), zwei vom Endschaltergetriebe über Nockenscheiben (124,126) betätigbare Endschalter (128,129) für die beiden Endstellungen des Armes (12,24), der über eine Kupplung (136) mit der Motorwelle (78) gekuppelte digitale Winkelcodierer (140), eine Steckerplatine (134) zum Zusammenfassen der Versorgungs- und Signalanschlüsse und eine damit verbundene Adapterplatte (150) zum Anschluß eines Versorgungs- und Signalübertragungskabels (152) vorgesehen sind und daß alle diese Baugruppen in einem gemeinsamen Antriebsgehäuse untergebracht sind.

2. Schwenkantrieb nach Anspruch 1, dadurch gekennzeichnet, daß das Getriebe (46) als Stirnradgetriebe ausgebildet und in einem Kompaktgehäuse (71) untergebracht ist, welches das eine Ende der Antriebseinheit (40) und das entsprechende Ende des Spindeltriebes (42) abschließt und einen Lageransatz (41) zur Anbringung des Schwenkantriebes am entsprechenden Roboterteil aufweist.

3. Schwenkantrieb nach Anspruch 2, dadurch gekennzeichnet, daß das Stirnradgetriebe je ein mit der Motorwelle (78) und ein mit einer Gewindespindel (60) des Spindeltriebes (42) gekuppeltes Stirnrad (70,74) sowie ein Zwischenrad (72) aufweist, und daß die beiden Zahnräder (70,74) unterschiedliche Zähnezahlen aufweisen, derart, daß die Gewindespindel (60) mit einer Untersetzung ins Langsame angetrieben wird.

4. Schwenkantrieb nach einem der Ansprüchen 1 bis 3, dadurch gekennzeichnet, daß der Spindeltrieb (42) eine Kugelgewindespindel (60) und eine gegen Drehung gesicherte Spindelmutter (62) mit daran befestigtem Strebenrohr (64) aufweist.

5. Schwenkantrieb nach Anspruch 4, dadurch gekennzeichnet, daß die bewegten Teile (60,62) des Spindeltriebes in allen Betriebszuständen durch eine Schutzrohrwandung (68,69) geschützt sind.

Fig. 1

Fig. 2

Fig. 3

Fig. 4

## Fig. 5

## Fig. 6

Fig. 7

EP 0 327 096 A1

Fig. 8

## Fig. 9

## Fig. 10

Fig. 11

Fig. 12

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4 ) |
|---|---|---|---|
| A | GB-A-2093796 (MITSUBISHI JUKOGYO)<br>* Seite 3, Zeile 41 - Zeile 63; Figuren 6, 14 *<br>* Seite 4, Zeile 104 - Zeile 122 *<br>--- | 1, 3 | B25J9/10<br>B25J9/08<br>B25J13/08 |
| A | FR-A-2540849 (LACH)<br>* Seite 3, Zeile 8 - Zeile 12 *<br>* Seite 4, Zeile 39 - Seite 5, Zeile 1 *<br>--- | 1, 5 | |
| A | US-A-3419158 (LEMELSON)<br>* Spalte 5, Zeile 53 - Zeile 74 *<br>--- | 1 | |
| A | US-A-4678952 (PETERSON)<br>* Zusammenfassung *<br>--- | 1 | |
| A | FR-A-2555493 (FUJI YUSOKI KOGYO)<br>* Seite 3, Zeile 24 - Zeile 34 *<br>--- | 6 | |
| A | FR-A-2560546 (TOYODA KOKI)<br>--- | | |
| A | EP-A-0061153 (RICHTER)<br>----- | | |

| | | | RECHERCHIERTE SACHGEBIETE (Int. Cl.4 ) |
|---|---|---|---|
| | | | B25J |

Der vorliegende Recherchenbericht wurde für alle Patentansprüche erstellt

| Recherchenort | Abschlußdatum der Recherche | Prüfer |
|---|---|---|
| DEN HAAG | 19 APRIL 1989 | LAMMINEUR P.C.G. |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes
   Dokument

EPO FORM 1503 03.82 (P0403)